# EUROPEAN PATENT SPECIFICATION

(11) **EP 1 662 624 B1**
(45) Date of publication and mention of the grant of the patent: **22.04.2009**
(21) Application number: 04370033.5
(22) Date of filing: 30.11.2004
(51) Int. Cl.: H01S 3/098, H01S 3/067, H01S 3/16

(54) **Passively Q-switched ytterbium-doped solid-state laser with samarium-doped fibre as saturable absorber**
Passiv gütegeschalteter Ytterbium-dotierter Festkörperlaser mit Samarium-dotierter Faser als sättigbarer Absorber
Laser à l' état solide dopé à l'ytterbium à déclenchement passif, avec fibre optique dopée au samarium comme absorbant optique saturable

(43) Date of publication of application: 31.05.2006
(73) Proprietor: UNIVERSITE DES SCIENCES ET TECHNOLOGIES DE LILLE, 59655 Villeneuve-d'Ascq Cedex (FR); FACULTE POLYTECHNIQUE DE MONS, 7000 Mons (BE)
(72) Inventor: Razdobreev, Igor, 59155 Faches Thumesnil (FR); Fotiadi, Andrei, 7000 Mons (BE); Kurkov, Andrey, 109180 Moscou (RU)
(74) Representative: Matkowska, Franck

(56) References cited:
- WO-A-03/038486
- US-A- 5 768 012
- US-A1- 2002 030 881
- US-A1- 2003 039 274
- LUO L ET AL: "Passive Q-switched erbium-doped fibre laser with saturable absorber" OPTICS COMMUNICATIONS, NORTH-HOLLAND PUBLISHING CO. AMSTERDAM, NL, vol. 161, no. 4-6, 15 March 1999 (1999-03-15), pages 257-263, XP004163360 ISSN: 0030-4018
- TORDELLA L ET AL: "An integrated Nd<3+>:Cr<4+> passively Q-switched all-fiber laser" LASERS AND ELECTRO-OPTICS EUROPE, 2003. CLEO/EUROPE. 2003 CONFERENCE ON MUNICH, GERMANY 22-27 JUNE 2003, PISCATAWAY, NJ, USA,IEEE, 22 June 2003 (2003-06-22), pages 606-606, XP010711843 ISBN: 0-7803-7734-6
- MURPHY K.A. AND SHELBY J.E.: 'Formation and properties of samarium aluminium/gallium borate glasses' PHYSICS AND CHEMISTRY OF GLASSES vol. 44, no. 5, October 2003, UK, pages 325 - 330
- FOTIADI A.A.; MEGRET P.; BLONDEL M.; GRUKH D.; KURKOV A.S.; RAZDOBREEV I.: 'Self-Q-switched fiber lasers with Rayleigh/SBS ring mirrors' PROCEEDINGS OF THE SPIE - THE INTERNATIONAL SOCIETY FOR OPTICAL ENGINEERING vol. 5137, 2003, USA, pages 119 - 130
- GRUKH D.A. ET AL: 'Self-Q-switched ytterbium-doped cladding-pumped fibre laser' QUANTUM ELECTRONICS vol. 32, no. 11, November 2002, UK, pages 1017 - 1019
- TICK P.A.: 'Optical absorption of rare-earth-doped BeF2 glasses' JOURNAL OF MATERIALS RESEARCH vol. 1, no. 1, February 1986, USA, pages 139 - 143

## Description

### Field of the Invention

The invention relates to passively Q-switched ytterbium-doped solid-state lasers in general, and more especially (but not only) to passively Q-switched ytterbium-doped fibre lasers. The pulsed solid-state laser of the invention can be advantageously used in various technical fields, and in particular in the field of medical laser devices.

### Prior Art

### Rare-earth-doped solid-state lasers

In recent years, rare-earth-doped solid-state hosts have been extensively used for making lasing media in solid-state laser systems. Generally, the solid-state host for the rare-earth dopant ions can be a crystal or a glass such as silicate glass or phosphate glass.

More particularly, glass optical fibres doped with rare-earth material have been widely developed and used in the recent years. Depending notably on the laser wavelength, many different rare-earth ions, such as erbium (Er), holmium (Hm), neodymium (Nd), samarium (Sm), thullium (Tm), ytterbium (Yb), praseodymium (Pr), can be used to make fibre lasers typically capable of operating in the wavelength range 0.45µm-3.5µm.

Technical characteristics and applications of fibre lasers and especially rare-earth-doped fibre lasers are described in Govind P. Agrawal, "Non Linear Fiber Optics", 2nd Edition, Academic Press, pp. 531-575.

Among the known rare-earth-doped fibre lasers, ytterbium-doped fibre laser operating near 1.01µm were first made in 1988. Mostly (but not only) silica-based Yb-doped fibre laser pumped at the wavelength near 915 nm or 975 nm are used.

### Active/Passive Q-switching

In the field of pulsed laser systems, Q-switching is a mode of laser operation that is extensively used for generating short optical pulse(s) of high intensity.

The theory of Q-switching operation of a laser system is explained in details in W. Koechner, "Solid-State Laser Engineering" Fifth edition, Springer, pp. 469 - 519.

The Q-switching technique is generally based on the alteration of the optical Q factor of the resonant laser cavity by an element placed inside the resonant laser cavity, and called therein "Q-switch". Q is the quality factor of the cavity, and is defined as the ratio of the energy stored in the resonant cavity to the energy loss per cycle. Under operation of the laser, the Q-switch inside the resonant laser cavity maintains a low Q factor until a high level of energy is stored within the cavity. When the Q factor is modified and reaches a predetermined threshold, the stored energy is rapidly released in the form of a short pulse (typically pulse duration within nanosecond-microsecond range) of high intensity. After the pulse generation, the Q-switch recovers its original state corresponding to a low Q factor of the laser cavity.

Q-switching techniques are generally classified in two main categories: active Q-switching and passive Q-switching.

Actively Q-switched lasers comprise mainly electrooptical Q-switches such as very fast electronically controlled optical shutters, acoustooptic Q-switches, and mechanical Q-switches (i.e. based upon rotation, oscillatory or translation of optical component(s) in the cavity for altering the Q factor).

In passively Q-switched lasers, the passive Q-switch generally consists in a medium (or material) acting as saturable absorber and having particular transmission characteristics : the medium becomes more transparent as the fluence increases, and at high fluence levels the medium "saturates" or "bleaches" which results in a high transmission. In practice, passive Q-switch with high absorption at the laser wavelength is placed inside the resonant laser cavity. Said passive Q-switch initially prevents laser oscillation. As the beam inside the laser cavity passes through the passive Q-switch, the said passive Q-switch absorbs a fraction of the growing intra-cavity field on each pass ; the intra-cavity flux increases until the passive Q-switch saturates and reaches a high transmission level (low losses in the cavity), which is causing the build-up of a Q-switched pulse.

Since passive Q-switch is switched only by the laser radiation itself, it requires no high voltage, no fast-electro-optic driver or RF modulator. As compared to aforesaid active Q-switching methods, the passive Q-switching method advantageously enables the manufacture of very simple, robust, small and low cost laser systems.

One known type of solid-state saturable absorbers that are commonly used as passive Q-switch in pulsed lasers are crystals having saturable colour centres, for example lithium fluoride (LiF) having F₂⁻ colour centres produced by gamma radiation of the crystal. Such passive Q-switch crystals are described for example in US patent 4,833,333.

In the case of fibre lasers, an undesirable aspect of the use of aforesaid solid-state saturable absorbers is that the fibre laser looses its all-fibre nature.

As all-fibre passive Q-switcher, the non-linear Brillouin mirror has been proposed in UK patent application GB 2309820 and discussed for example in publication: A. Fotiadi et al. SPIE Proceedings Vol.5137(2003), pp.119-130. The main advantage of the Brillouin mirror is simplicity and universality for any operation laser wavelength. However, because of the random nature of Brillouin scattering process, such a mirror is not able to provide stable amplitude, duration and repetition of Q-switch pulses.

The use of Cr⁴⁺-doped fibre as saturable passive absorber in a Q-switched Nd³⁺-doped fibre laser has also already been proposed in publication : L.Tordella et al. Electronics Letters vol 39(2003) pp. 1307-1308. Said passively Q-switched Nd³⁺:Cr⁴⁺all-fibre laser enables to generate Q-switch pulses having the required stable amplitude and stable repetition rate. However, up to date only microsecond pulse generation can be achieved, and to the knowledge of the inventors, the efficiency of the use of Cr⁴⁺-doped fibre as saturable passive absorber has been demonstrated only for Nd-doped fibre laser.

Publication US 2002/0030881 discloses a passively Q-switch solid-state laser, and comprising an ytterbium-doped solid host as lasing medium and operating in wavelengths between 975 mm and 985 mm.

### Objectives of the invention

One first general and main objective of the invention is to propose a novel technical solution for passively Q-switching an ytterbium-doped solid-state laser.

A further and auxiliary objective of the invention is to propose a novel passively Q-switched all-fibre laser comprising an ytterbium-doped fibre as lasing medium.

A further and auxiliary objective of the invention is to propose a passively Q-switched ytterbium-doped solid-state laser, and preferably ytterbium-doped fibre laser, that can generate short pulse(s) having a stable amplitude.

A further and auxiliary objective of the invention is to propose a passively Q-switched ytterbium-doped solid-state laser, and preferably ytterbium-doped fibre laser, that can generate short pulses having a stable repetition rate.

A further and auxiliary objective of the invention is to propose a passively Q-switched ytterbium-doped solid-state laser, and preferably ytterbium-doped fibre laser, that can generate short pulse(s) having a duration less than 1µs.

### Summary of the invention

At least the aforesaid first general and main objective is achieved by the ytterbium-doped solid-state laser defined in claim 1 and by the method of passively Q-switching an Ytterbium-doped solid-state laser defined in claim 6.

All or part of the aforesaid auxiliary objectives is further achieved by the ytterbium-doped solid-state laser and by the passive Q-switching method defined in the dependent subclaims.

The general technical solution of the invention is based on the use of a samarium-doped solid-state host as saturable absorber in a passively Q-switched ytterbium-doped solid-state laser.

In the present text, including the claims, the wording "solid-state host" encompasses all solid-state matrix, including crystal and glass.

Other characteristics and advantages of the invention will become readily apparent in view of the following detailed description of one preferred embodiment of the invention and the accompanying drawings, which description and drawings are given by way of non-exhaustive and nonlimiting example of the invention.

### Brief description of the drawings

- Figure 1 is schematic drawing of one example of all-fibre laser of the invention, wherein the resonant laser cavity is linear ;
- Figure 2 shows the absorption spectrum of the Sm-doped fibre used for making the laser of figure 1 ;
- Figure 3 shows a train of several pulses generated by the laser of figure 1 ;
- Figure 4 is an enlarged scale view of one pulse generated by the laser of figure 1.

### Detailed description

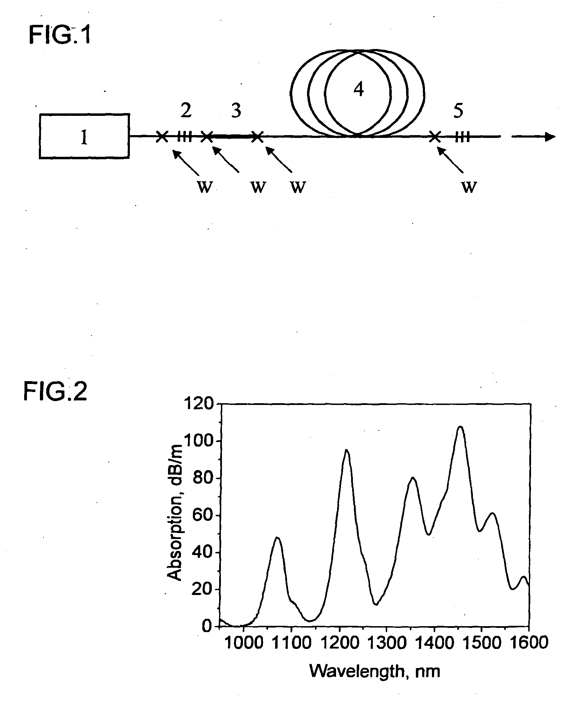

Figure 1 is a scheme of an example of an end-pumped and passively Q-switched Yb-doped solid-state laser of the invention having an operation wavelength in the region near 1.08µm.

Said passively Q-switched Yb-doped solid-state laser comprises:
- a pump module 1,
- two fibre Bragg gratings 2 and 5 delimiting the resonant laser cavity of the laser ; in this example, the resonant cavity is a linear Fabry-Perot cavity ;
- a short segment 3 of double-clad Sm-doped fibre,
- a double-clad Yb-doped fibre 4 spliced directly with the Sm-doped fibre 3

On figure 1, each cross referred (w) represents a splicing point.

Preferably, the pump source of the pump module 1 is a laser diode operating at 975nm, with output power up to 10W. The invention is however not limited to the use of a laser diode as pump source, but can be extended to the use of any known type of pump source that is suitable to pump a lasing medium in a laser cavity.

The two fibre Bragg gratings 2 and 5 are centred at 1084nm. Fibre Bragg grating 2 (entry of the cavity laser) has a high coefficient of reflection (greater than 99%). Fibre Bragg grating 5 (output of the cavity laser) has a low coefficient of reflection, typically less than 5%.

In operation of the laser, the Yb-doped fibre is continuously pumped by the pump source 1 and the Sm-doped fibre inside the resonant cavity laser is acting as saturable absorber, and is passively Q-switching the laser.

In a preferred embodiment, the Yb-doped fibre 4 and the Sm-doped fibre 3 were double clad fibres. The general structure of such fibres is well known in the art and can be found for example in E.Snitzer, H.Po, F.Hakimi, R.Tumminelli, B.C.McCollum. "Double-clad, offset core Nd fiber laser." Proc. Conf. Optical Fiber Sensors, Postdeadline paper PD5 (1988).

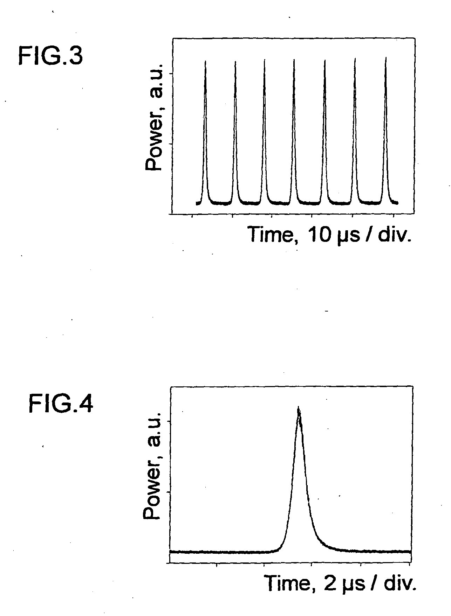

In the particular embodiment experimented by the inventors [Q-switch pulse(s) of figures 3 and 4)]:

### Yb-doped fibre 4

The Yb-doped fibre 4 was the one manufactured by Institute of Radioengineering and Electronics (IRE) of Russian Academy of Science, Moscow, Russia. The core diameter was equal to 6 µm (+/-1 µm). The inner cladding surrounding the core had a square profile 120x120µm². The fibre had the numerical apertures 0.14 and 0.45 for signal and pump radiation correspondingly. The Yb³⁺-ion concentration was in the range 5·10¹⁹ - 2·10²⁰cm⁻³. The length of Yb-doped fibre 4 was 20 meters.

### Sm-doped-fibre 3

The Sm-doped fibre 3 was also manufactured by Institute of Radioengineering and Electronics (IRE) of Russian Academy of Science, Moscow, Russia. The length of Sm-doped fibre 3 was about 10cm. The core diameter of fibre 3 was equal to 6 µm (+/-1 µm). The cladding surrounding the core had a diameter of 125µm. The fibre had the numerical apertures 0.14 and 0.45 for signal and pump radiation correspondingly. Furthermore the Sm-doped fibre 3 that was experimented was characterized by absorption spectrum shown on figure 2 (which absorption spectrum is dependent on the Sm-ion concentration in the core of the fibre 3).

The invention can be realised with many other Sm-doped fibres and Yb-doped fibres known in the art. In particular, other Sm-doped fibres that might be suitable for the invention are those, for example, commercialised by Canadian institute INO ("Institut National d'Optique") under reference "SM119". Other Yb-doped fibres that might be suitable for the invention are those, for example, commercialised by US company NUFERN under reference YDF-5/125.

In the embodiment of figure 1, the use of a Sm-doped fibre of the double clad type is justified only by the fact that the Yb-doped fiber laser is end pumped and the Sm-doped fibre 3 is placed in the cavity between the pump 1 and the lasing fibre 4. In an other variant of the invention, for example wherein the Sm-doped fibre 3 is placed in the laser cavity between lasing fibre 4 and outside mirror 5 of the cavity, then the Sm-doped fibre 3 can be of conventional single-clad fibre. The laser cavities avoiding direct end pumping (through an injector) also allow the use of a conventional single-clad Sm-doped fibre.

Figure 3 and 4 are showing the Q-switch pulses that have been obtained at the output of the laser cavity, at 6W of pump power. For obtaining these curves of figures 3 and 4, a fraction of the output laser optical signal was reflected by beam splitter, detected by a fast photodiode and recorded by a digital oscilloscope. The typical time resolution of the registration tract was about 2 ns.

Referring to figures 3 and 4, in operation of the laser at 6 W pump power, a stable periodical generation of background free Q-switch pulses has been observed with repetition rate about 125 KHz and pulse duration about 500ns at full width on half maximum (FWHM). The average laser output power was 2.5 W.

It should be emphasized that the repetition rate, the pulse duration and the pulse peak power are dependent on the laser configuration parameters: the length and intrinsic characteristics of the Sm-doped fibre 3, the coefficient of reflection of Bragg gratings 2, 5, and the length and intrinsic characteristics of the Yb-doped fibre 4. Within the scope of the invention, other values for these parameters can thus be easily achieved by one skilled in the art.

The pulsed laser described in reference to figures 1 to 4 offers several advantages.

As a passively Q-switched laser, this laser is very simple, robust, small-sized and low cost. In operation, the laser of the invention advantageously generates high power pulses having a stable amplitude, and stable repetition rate.

In the embodiment of figure 1, the pulsed laser is advantageously an all-fibre laser. However, in other variants of the invention, the Sm-doped fibre laser and/or the Yb-doped fibre could be respectively replaced by Sm-doped and/or Yb-doped solid-state host wherein the doped solid-state host is not necessarily in the form of a fibre ; for example crystal host or glass host (but not in the form of optical fibre) can be also used. In such case, the laser would not be of the all-fibre type.

Thanks to the invention, stable passive Q-switch pulses of short duration can be advantageously obtained (typically less than 1µs). Nevertheless, in other embodiments of the invention, the laser could also be designed to generate passive Q-switch pulses having a duration that is greater than 1µs.

In the embodiment of figure 1, the laser cavity is linear. The invention is not limited to such particular laser cavity, but could be also implemented with any known laser resonator configuration (for example ring cavity or a combination of ring cavity and linear cavity).

For sake of clarity, it is underlined that the scope of the invention encompasses more generally the use of any Sm-doped solid-state host (preferably but non only Sm-doped fibre) as saturable absorber, placed inside a resonant laser cavity (independently of the type of cavity), for passively Q-switching a solid-state laser comprising an Yb-doped solid-state host as lasing medium (preferably but not only an Yb-doped fibre).

## Claims

1. A passively Q-switched solid-state laser comprising an ytterbium-doped solid-state host as lasing medium and a saturable absorber as passive Q-switch, and wherein the passive Q-switch comprises a samarium-doped solid-state host, **characterized in that** the passively Q-switched solid-state laser has an operation wavelength in the region near 1.08 µm, and comprises two fiber Bragg gratings centred at 1084 nm delimiting the resonant laser cavity.

2. The laser according to claim 1 wherein the samarium-doped solid-state host is a samarium-doped fibre.

3. The laser according to claim 1 or 2 wherein the ytterbium-doped solid-state host is an Ytterbium-doped fibre.

4. The laser according to claims 2 and 3 wherein the ytterbium-doped fibre is welded at one extremity of the samarium-doped fibre.

5. The laser according to any one of claim 1 to 4 wherein the laser is of the all-fibre type.

6. Method of passively Q-switching a solid-state laser comprising an ytterbium-doped solid-state host as lasing medium and a samarium-doped solid-state host as saturable absorber for generating the Q-switch pulses, **characterized in that** the passively Q-switched solid-state laser has an operation wavelength in the region near 1.08 µm and comprises two fiber Bragg gratings centred at 1084 nm delimiting the resonant laser cavity.

7. The method according to claim 6 wherein the samarium-doped solid-state host is a samarium-doped fibre.

8. The method according to claim 6 or 7 wherein the ytterbium-doped solid-state host is an ytterbium-doped fibre.

## Patentansprüche

1. Passiv gütegeschalteter Festkörperlaser, umfassend einen Ytterbiumdotierten Festkörper-Host als Lasermedium und einen sättigbaren Absorber als passiven Güteschalter, wobei die passive Güteschaltung einen Samarium-dotierten Host umfasst, **dadurch gekennzeichnet, dass** der passiv gütegeschaltete Festkörperlaser eine Betriebswellenlänge im Bereich von nahe 1,08 µm hat und zwei, bei 1084 nm zentrierte Bragg'sche Fasergitter (fiber Bragg gratings) aufweist, die den Laserresonator begrenzen.

2. Laser nach Anspruch 1, worin der Samarium-dotierte Festkörper-Host eine Samarium-dotierte Faser ist.

3. Laser nach Anspruch 1 oder Anspruch 2, worin der Ytterbium-dotierte Festkörper-Host eine Ytterbium-dotierte Faser ist.

4. Laser nach den Ansprüchen 2 und 3, worin die Ytterbium-dotierte Faser an einem Ende der Samarium-dotierten Faser angeschweißt ist.

5. Laser nach einem der Ansprüche 1 bis 4, worin der Laser von dem "Allfaser"-Typ (all-fibre type) ist.

6. Verfahren zum Güteschalten eines Festkörperlasers mit einem Ytterbiumdotierten Festkörper-Host als Lasermedium und mit einem Samarium-dotierten Festkörper-Host als sättigbaren Absorber zum Generieren der Güteschaltungs-Pulse, **dadurch gekennzeichnet, dass** der passiv gütegeschaltete Festkörperlaser eine Betriebswellenlänge im Bereich von nahe 1,08 µm hat und zwei bei 1084 nm zentrierte Bragg'sche Fasergitter umfasst, die den Laserresonator begrenzen.

7. Verfahren nach Anspruch 6, worin der Samarium-dotierte Festkörper-Host eine Samarium-dotierte Faser ist.

8. Verfahren nach Anspruch 6 oder 7, worin der Ytterbium-dotierte Festkörper-Host eine Ytterbium-dotierte Faser ist.

## Revendications

1. Laser à l'état solide à déclenchement passif comprenant un hôte à l'état solide dopé à l'ytterbium comme milieu actif et un absorbant saturable comme déclencheur passif, et dans lequel le déclencheur passif comprend un hôte à l'état solide dopé au samarium, **caractérisé en ce que** le laser à l'état solide à déclenchement passif a une longueur d'onde de fonctionnement dans la région proche de 1,08 µm et comprend deux réseaux de Bragg sur fibre centrés à 1084 nm délimitant la cavité laser résonante.

2. Laser selon la revendication 1, dans lequel l'hôte à l'état solide dopé au samarium est une fibre dopée au samarium.

3. Laser selon la revendication 1 ou 2, dans lequel l'hôte à l'état solide dopé à l'ytterbium est une fibre dopée à l'ytterbium.

4. Laser selon les revendications 2 et 3, dans lequel la fibre dopée à l'ytterbium est soudée à une extrémité de la fibre dopée au samarium.

5. Laser selon l'une quelconque des revendications 1 à 4, dans lequel le laser est du type tout fibre.

6. Procédé de déclenchement passif d'un laser à l'état solide comprenant un hôte à l'état solide dopé à l'ytterbium comme milieu actif et un hôte à l'état solide dopé au samarium comme absorbant saturable pour générer les impulsions de déclenchement, **caractérisé en ce que** le laser à l'état solide à déclenchement passif a une longueur d'onde de fonctionnement dans la région proche de 1,08 µm et comprend deux réseaux de Bragg sur fibre centrés à 1084 nm délimitant la cavité laser résonante.

7. Procédé selon la revendication 6, dans lequel l'hôte à l'état solide dopé au samarium est une fibre dopée au samarium.

8. Procédé selon la revendication 6 ou 7, dans lequel l'hôte à l'état solide dopé à l'ytterbium est une fibre dopée à l'ytterbium.
